# EUROPÄISCHE PATENTSCHRIFT

(11) **EP 4 303 099 B1**
(45) Veröffentlichungstag und Bekanntmachung des Hinweises auf die Patenterteilung: **04.03.2026**
(21) Anmeldenummer: 23171606.9
(22) Anmeldetag: 04.05.2023
(51) Int. Cl.: B62D 15/02

(54) **VERFAHREN ZUM ERKENNEN EINER ASYMMETRIE EINER FAHRWERKSGEOMETRIE EINES KRAFTFAHRZEUGS**
METHOD FOR DETECTING ASYMMETRY OF A CHASSIS GEOMETRY OF A MOTOR VEHICLE
PROCÉDÉ DE DÉTECTION D'UNE ASYMÉTRIE D'UNE GÉOMÉTRIE DE CHÂSSIS D'UN VÉHICULE AUTOMOBILE

(30) Priorität: 17.06.2022 DE 102022206105
(43) Veröffentlichungstag der Anmeldung: 10.01.2024
(60) Teilanmeldung: 24201760.6
(73) Patentinhaber: VOLKSWAGEN AG, 38440 Wolfsburg (DE)
(72) Erfinder: ACKERT, Lukas, 38373 Frellstedt (DE); MÜNNING, Daniel, 38124 Braunschweig (DE); THIEMANN, Hendrik, 38554 Weyhausen (DE)

(56) Entgegenhaltungen:
- DE-A1- 10 252 765
- DE-A1- 102019 111 415
- DE-A1- 102020 212 526

## Beschreibung

Die Erfindung betrifft zwei Verfahren zum Erkennen einer Asymmetrie einer Fahrwerksgeometrie eines Kraftfahrzeugs.

Vielfältige Probleme bzw. Abweichungen vom Auslieferungszustand am Fahrwerk eines Fahrzeuges können zu einem ungewollten Fahrverhalten führen. Falsch gewuchtete Räder eines Fahrzeugs können zu einem Schwingen eines Radträgers, einer Lenkung und damit auch des Fahrzeugs führen. Auch montierte Schneeketten äußern sich im Fahrverhalten des Fahrzeugs. Fehlgewuchtete Räder oder Schneeketten sind Phänomene, die sich auch durch einen ungeübten Fahrer recht schnell erkennen lassen. Weiterhin gibt es Auffälligkeiten wie eine verstellte Spur, die durch den Fahrer nicht unbedingt leicht am Fahrverhalten erkannt werden können, aber das Verhalten von Assistenzfunktionen des Fahrzeugs erheblich verschlechtern und den Verschleiß am Fahrzeug erhöhen können. Eine verstellte Spur kann enorme Auswirkungen auf Durchführungszeiten eines assistierten Spurwechsels haben und damit für eine stark erhöhte Abbruchquote des Spurwechsels sorgen. Sorgt eine leicht verstellte Spur des Fahrzeugs für einen Drang des Fahrzeugs in eine Richtung, kann ein automatisierter Spurwechsel in diese Richtung systematisch zu schnell durchgeführt werden, was in einem Abbruch des Spurwechsels endet.

Aus der EP 1 975 040 A1 ist ein Verfahren zur Detektion und Kompensation periodischer Störungen in einer Lenkeinrichtung eines Kraftfahrzeugs bekannt. Hierfür wird eine geschwindigkeitsabhängige Zielfrequenz ermittelt, die einer Radrotationsfrequenz entspricht und eine Fourier-Analyse eines zeitlichen Verlaufs einer Lenkkraft oder eines Lenkmoments ausschließlich für die ermittelte Zielfrequenz bzw. für deren Vielfaches durchgeführt. Die so gewonnenen Amplituden werden abhängig von der Fahrzeuggeschwindigkeit aufgetragen und eine Modellfunktion an diese Kurve angepasst, deren angepasster Parameter dann ein robustes Maß für die Störungen darstellt. Abhängig von diesem Parameter werden die Störungen mittels gezielter Einwirkung auf eine Fremdunterstützung der Lenkung unterdrückt.

Darüber hinaus ist aus der DE 10 2009 053 404 A1 ein Verfahren zur Diagnose mindestens eines Fehlers in einem Fahrwerk eines Fahrzeugs bekannt.

Weiterhin offenbart die DE 10 2008 036 001 A1 ein Verfahren zum Betreiben eines Lenksystems zum Lenken eines Kraftfahrzeugs, bei welchem ein Ausmaß einer Störwirkung auf das Lenksystem abgeschätzt wird. In Abhängigkeit von dem abgeschätzten Ausmaß der Störwirkung wird ein elektrisches Signal erzeugt und eine elektrische Lenkhilfe unterstützt das Lenken mittels des erzeugten Signals.

Aus der DE 102 52 765 A1 ist ein gattungsgemäßes Verfahren zum Feststellen einer fehlerhaften Achseinstellung eines Fahrzeugs bekannt, wobei der vom Fahrer an einer Lenkhandhabe erzeugte Lenkwinkel erfasst wird. Hierbei wird eine den tatsächlichen Kurs des Fahrzeugs repräsentierende Größe erfasst, die bei stationären Fahrzuständen sich aus der Differenz des sich aus dem Lenkwinkel ergebenden Kurses und dem tatsächlichen Kurs ergebende Kursabweichung ermittelt und auf einen Fehler in der Achseinstellung des Fahrzeugs geschlossen, wenn die Kursabweichung einen Schwellenwert übersteigt.

Überdies offenbart die DE 10 2020 212 526 A1 ein Verfahren zur Früherkennung unregelmäßiger Reifenabnutzung und/oder unbeabsichtigter Veränderungen von Fahrwerkseinstellungen eines Kraftfahrzeugs.

Es ist die Aufgabe der Erfindung, eine Lösung zu schaffen, welche ein besonders sicheres Betreiben eines Kraftfahrzeugs beim Ermitteln eines Fehlers in einem Fahrwerk des Kraftfahrzeugs ermöglicht.

Diese Aufgabe wird durch die Gegenstände der unabhängigen Ansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Die Erfindung betrifft ein erstes Verfahren zum Erkennen einer Asymmetrie einer Fahrwerksgeometrie eines Kraftfahrzeugs. Bei dieser Asymmetrie der Fahrwerksgeometrie handelt es sich um einen Fehler in einem Fahrwerk des Kraftfahrzeugs. Unter der Fahrwerksgeometrie sind alle wesentlichen Größen des Fahrwerks zu verstehen, welche das Fahrverhalten, etwa die Spurhaltungs- und Lenkeigenschaften, positiv oder auch negativ beeinflussen. Unter dem Fahrwerk ist die Gesamtheit aller Teile des Kraftfahrzeugs zu verstehen, die eine Verbindung des Fahrgestells über die Räder zu einer Fahrbahn herstellen. Das Fahrwerk umfasst Räder, Radträger, Radlager, Bremsen, Radaufhängungen, Federung inklusive Stabilisator, Dämpfung und Lenkung. Zudem kann das Fahrwerk einen Fahrschemel umfassen.

Bei dem Verfahren ist es vorgesehen, dass eine Lenkinformation, welche eine Lenkung des Kraftfahrzeugs charakterisiert, zusammen mit einer ermittelten Bewegungskurve des Kraftfahrzeuges hinsichtlich eines Verziehens des Kraftfahrzeugs analysiert wird. Bei der Lenkung handelt es sich um eine Vorrichtung zur Beeinflussung der Fahrtrichtung des Kraftfahrzeugs. Die Lenkinformation kann somit charakterisieren, wie die Lenkung des Kraftfahrzeugs eingestellt ist, wodurch auf die Beeinflussung der Fahrtrichtung des Kraftfahrzeugs geschlossen werden kann. Bei dem Verfahren wird somit die aus einem Lenken des Kraftfahrzeugs resultierende Bewegungskurve des Kraftfahrzeugs mit einer durch die Lenkung charakterisierten gewünschten Beeinflussung der Fahrtrichtung verglichen. Das bedeutet, dass eine durch die Lenkung vorgegebene Soll-Bewegungskurve mit einer im Kraftfahrzeug resultierenden Ist-Bewegungskurve verglichen wird, wobei das Verziehen des Kraftfahrzeugs festgestellt wird, wenn die Ist-Bewegungskurve über einen vorgegebenen Toleranzbereich hinaus von der Soll-Bewegungskurve abweicht. Ursächlich für ein derartiges Verziehen des Kraftfahrzeugs können eine falsche Spureinstellung oder ein unterschiedlicher Reifendruck in Reifen des Kraftfahrzeugs oder zumindest leicht gelöste Radschrauben oder ein Verschleiß an Lagergummis sein, wodurch Spiel an den Lagergummis entstehen kann.

Bei dem Verfahren ist es vorgesehen, dass bei Ermitteln des Verziehens die Asymmetrie der Fahrwerksgeometrie festgestellt wird und eine Aktion des Kraftfahrzeugs ausgelöst wird. Diese Aktion wird in Abhängigkeit von der ermittelten Stärke des Verziehens ausgewählt. Hierdurch ist die ausgelöste Aktion besonders gut an das Verziehen des Kraftfahrzeugs angepasst. Mit anderen Worten wird eine erste Aktion ausgelöst, wenn ein leichtes Verziehen des Kraftfahrzeugs festgestellt wird, und eine zu der ersten Aktion unterschiedliche zweite Aktion ausgelöst, wenn ein im Vergleich zu dem leichteren Verziehen stärkeres Verziehen des Kraftfahrzeugs festgestellt wird. Durch das Auslösen der Aktion kann sichergestellt werden, dass das Kraftfahrzeug trotz des Verziehens besonders sicher weiterbetrieben werden kann.

Bei der Erfindung ist es vorgesehen, dass ein erstes Lenkmoment für eine Rechtskurve mit einem zweiten Lenkmoment für eine Linkskurve verglichen wird und das Verziehen in Abhängigkeit von einem Unterschied zwischen den Lenkmomenten festgestellt wird. Das bedeutet, dass festgestellt wird, wie hoch das erste Lenkmoment ist, welches notwendig ist, um das Kraftfahrzeug durch die Rechtskurve zu steuern, und welches zweite Lenkmoment notwendig ist, um das Kraftfahrzeug durch die Linkskurve zu steuern. Weicht das erste Lenkmoment über ein vorgegebenes Toleranzmaß von dem zweiten Lenkmoment ab, dann wird festgestellt, dass das Verziehen des Kraftfahrzeugs und somit die Asymmetrie in der Fahrwerksgeometrie vorliegt. Über den Vergleich der notwendigen Lenkmomente für Rechtskurven mit den notwendigen Lenkmomenten für Linkskurven kann somit das Verziehen des Kraftfahrzeugs in kurvigen Streckenabschnitten festgestellt werden.

Alternativ oder zusätzlich ist es vorgesehen, dass als Aktion eine Spurwechselzeit eines mittels eines Fahrassistenzsystems assistierten Spurwechsels angepasst wird, wenn festgestellt wird, dass die ermittelte Stärke des Verziehens einen ersten, niedrigeren Grenzwert überschreitet. Durch das Anpassen dieser Spurwechselzeit kann ausgeglichen werden, dass aufgrund des Verziehens des Kraftfahrzeugs bei einem Nichtanpassen der Spurwechselzeit der assistierte Spurwechsel zu schnell oder zu langsam stattfinden würde, je nach Richtung des Verziehens des Kraftfahrzeugs und Richtung des Spurwechsels. In der ECE R79, welche die Homologation eines assistierten Fahrspurwechsels beschreibt, sind genaue Spurwechselzeiten beschrieben, die zwingend eingehalten werden müssen. Durch das Anpassen der Spurwechselzeit kann infolgedessen eine Abbruchrate von assistierten Spurwechseln verringert werden, indem verhindert wird, dass ein jeweiliger assistierter Spurwechsel zu schnell abläuft. Alternativ oder zusätzlich kann ein Fahrerassistenzsystem deaktiviert werden, wenn festgestellt wird, dass die ermittelte Stärke des Verziehens einen zweiten, höheren Grenzwert überschreitet. Überschreitet die ermittelte Stärke des Verziehens somit den zweiten Grenzwert, dann wird festgestellt, dass das Verziehen des Kraftfahrzeugs besonders stark ist und somit das Fahrerassistenzsystem zu deaktivieren ist. Infolge des Deaktivierens des Fahrerassistenzsystems ist beispielsweise ein assistierter Spurwechsel des Kraftfahrzeugs nicht mehr möglich. Je nach Stärke des ermittelten Verziehens kann somit bei Ermitteln eines lediglich geringen Verziehens des Kraftfahrzeugs die Spurwechselzeit angepasst werden, um einen sicheren Spurwechsel des Kraftfahrzeugs zu ermöglichen, oder das Fahrerassistenzsystem deaktiviert werden, sofern ein starkes Verziehen des Kraftfahrzeugs festgestellt wird. Durch das Deaktivieren des Fahrerassistenzsystems wird sichergestellt, dass ein unsicherer assistierter Spurwechsel, wie beispielsweise ein besonders schneller assistierter Spurwechsel, unterbleibt.

In einer möglichen Weiterbildung der Erfindung ist es vorgesehen, dass die Lenkinformation ein Lenkmoment und/oder einen Lenkwinkel charakterisiert. Das bedeutet, dass das Verziehen des Kraftfahrzeugs in Abhängigkeit von einem in der Lenkung eingestellten Lenkmoment und/oder einem in der Lenkung eingestellten Lenkwinkel sowie der ermittelten Bewegungskurve des Kraftfahrzeugs ermittelt wird. Über das Lenkmoment bzw. den Lenkwinkel kann besonders einfach festgestellt werden, ob die gewünschte Soll-Bewegungskurve des Kraftfahrzeugs mit der erzielten Ist-Bewegungskurve des Kraftfahrzeugs übereinstimmt. Somit kann besonders einfach das Verziehen des Kraftfahrzeugs festgestellt werden.

In einer weiteren möglichen Ausgestaltung der Erfindung ist es vorgesehen, dass festgestellt wird, dass sich das Kraftfahrzeug auf einem geraden Streckenabschnitt befindet, wenn ein Radius einer Fahrbahn, auf welcher sich das Kraftfahrzeug befindet, größer als ein Grenzradius ist und eine Neigung der Fahrbahn kleiner als eine Grenzneigung ist. Das Verziehen des Kraftfahrzeugs auf dem geraden Streckenabschnitt wird festgestellt, wenn die Lenkinformation charakterisiert, dass für ein fahrbahnmittiges Halten des Kraftfahrzeugs ein aufgebrachtes Lenkmoment größer als ein Grenzmoment ist und/oder ein aufgebrachter Lenkwinkel größer als ein Grenzwinkel ist. Das bedeutet, dass das Verziehen des Kraftfahrzeugs festgestellt wird, wenn zum einen ermittelt wird, dass sich das Kraftfahrzeug auf einem geraden Streckenabschnitt befindet, und zum anderen festgestellt wird, dass auf die Lenkung das Lenkmoment aufgebracht ist, welches größer als das Grenzmoment ist und/oder auf die Lenkung der Lenkwinkel aufgebracht ist, welcher größer als der Grenzwinkel ist. Auf dem geraden Streckenabschnitt kann somit das Verziehen des Kraftfahrzeugs festgestellt werden, wenn ein Lenkwinkeloffset ermittelt worden ist. Es wird festgestellt, dass sich das Kraftfahrzeug auf dem geraden Streckenabschnitt befindet, wenn der Radius der Fahrbahn besonders groß ist und somit keine Kurve der Fahrbahn vorliegt bzw. lediglich eine Kurve mit besonders geringer Krümmung vorliegt und die Fahrbahn keine bzw. lediglich eine besonders geringe Neigung aufweist. Es wird davon ausgegangen, dass in diesem geraden Streckenabschnitt bei einer symmetrischen Fahrwerksgeometrie für ein fahrbahnmittiges Halten des Kraftfahrzeugs kein Lenkmoment auf die Lenkung aufzubringen ist bzw. kein Lenkwinkel in der Lenkung einzustellen ist. Der Lenkwinkel beschreibt eine Auslenkung der Lenkung, insbesondere eines Lenkrads der Lenkung, ausgehend von einer neutralen Position und somit einer Ausgangslage. Es wird angenommen, dass das Kraftfahrzeug in dem geraden Streckenabschnitt als Bewegungskurve eine Gerade abfährt. Somit kann basierend auf dem Feststellen, dass der gerade Streckenabschnitt vorliegt, auf einen geraden Abschnitt einer Bewegungskurve des Kraftfahrzeugs geschlossen werden.

Auf dem geraden Streckenabschnitt kann das Verziehen des Kraftfahrzeugs besonders einfach und mit besonders großer Zuverlässigkeit festgestellt werden.

In einer möglichen Weiterbildung der Erfindung ist es vorgesehen, dass mehrere erste Lenkmomente für Rechtskurven und mehrere zweite Lenkmomente für Linkskurven ermittelt werden, jeweilige ermittelte Lenkmomente in Rechtskurven und in Linkskurven hinsichtlich Kurvenradius und Durchfahrungsgeschwindigkeit kategorisiert werden, jeweilige Lenkmomente von Rechtskurven mit jeweiligen Lenkmomenten von Linkskurven in einer gleichen Kategorie verglichen werden und das Verziehen in Abhängigkeit von einem Unterschied zwischen den ermittelten Lenkmomenten festgestellt wird. Durch das Kategorisieren der Lenkmomente und somit Einteilen der Lenkmomente in jeweilige Kategorien hinsichtlich Kurveneigenschaften der jeweiligen Kurven, insbesondere dem Kurvenradius und der Durchfahrungsgeschwindigkeit, wird sichergestellt, dass jeweils lediglich Lenkmomente für ähnliche bzw. gleiche Kurvensituationen der Linkskurve und der Rechtskurve verglichen werden. Die Kurvensituation wird jeweils durch den Kurvenradius der Kurve sowie durch die Durchfahrungsgeschwindigkeit charakterisiert. Jeder Kategorie kann genau eine Kurvensituation zugeordnet sein. Das bedeutet, dass für unterschiedliche Kurvensituationen unterschiedliche Kategorien vorgesehen sind. Mit anderen Worten wird das erste Lenkmoment der Rechtskurve mit dem zweiten Lenkmoment der Linkskurve verglichen, wobei die Rechtskurve und die Linkskurve dieser zum Vergleich herangezogenen Kurvensituation zumindest einen ähnlichen Kurvenradius, insbesondere einen gleichen Kurvenradius, aufweisen und die jeweiligen Kurven mit einer ähnlichen, insbesondere mit einer gleichen, Geschwindigkeit durchfahren worden sind. Für diese gleiche Kurvensituation der Rechtskurve mit der Linkskurve wäre zu erwarten, dass das erste Lenkmoment zumindest innerhalb eines vorgegebenen Toleranzbereichs mit dem zweiten Lenkmoment übereinstimmt bei einer Symmetrie der Fahrwerksgeometrie. Wird somit bei dem Vergleich festgestellt, dass das erste Lenkmoment mehr als den vorgegebenen Toleranzbereich von dem zweiten Lenkmoment abweicht, dann wird die Asymmetrie der Fahrwerksgeometrie festgestellt. Das Kategorisieren der jeweiligen ermittelten Lenkmomente hinsichtlich Geschwindigkeit des durchfahrenden Kraftfahrzeugs sowie hinsichtlich Kurvenradius ermöglicht somit, dass sichergestellt werden kann, dass Lenkmomente von gleichen Kurvensituationen miteinander verglichen werden, sofern die miteinander verglichenen Lenkmomente für die Linkskurve bzw. für die Rechtskurve einer gleichen Kategorie zugeordnet sind. Das Feststellen des Unterschieds von miteinander verglichenen Lenkmomenten, weil Lenkmomente von unterschiedlichen Kurvensituationen verglichen worden sind, kann somit besonders gut vermieden werden. Hierdurch kann die Asymmetrie der Fahrwerksgeometrie mit besonders großer Sicherheit festgestellt werden.

In diesem Zusammenhang kann es in einer weiteren möglichen Ausgestaltung der Erfindung vorgesehen sein, dass für sämtliche Rechtskurven und für sämtliche Linkskurven einer Kategorie der Mittelwert der Lenkmomente gebildet wird und der Mittelwert der Lenkmomente eine Kategorie für Linkskurven mit dem Mittelwert der Lenkmomente der gleichen Kategorie für Rechtskurven verglichen wird. Das Bilden des Mittelwerts der jeweiligen Lenkmomente einer gemeinsamen Kategorie sowohl für Linkskurven als auch für Rechtskurven ermöglicht ein Ausmitteln von Ausreißern, wodurch eine Fehlerwahrscheinlichkeit besonders geringgehalten werden kann.

In einer weiteren möglichen Ausgestaltung der Erfindung ist es vorgesehen, dass als Aktion eine Warnung im Kraftfahrzeug ausgegeben wird, wenn festgestellt wird, dass die ermittelte Stärke des Verziehens einen zweiten, höheren Grenzwert überschreitet. Überschreitet die ermittelte Stärke des Verziehens somit den zweiten Grenzwert, dann wird festgestellt, dass das Verziehen des Kraftfahrzeugs besonders stark ist und somit der Fahrer des Kraftfahrzeugs zu warnen ist. Durch das Warnen des Fahrers mittels der Warnung kann der Fahrer dazu angeregt werden, eine Werkstatt für das Kraftfahrzeug aufzusuchen, damit in der Werkstatt die Asymmetrie der Fahrwerksgeometrie behoben werden kann. Infolgedessen wird ein sicheres Betreiben des Kraftfahrzeugs nach dem Beheben der Asymmetrie der Fahrwerksgeometrie wieder möglich. Die Warnung kann im Kraftfahrzeug ausgegeben werden, sofern ein starkes Verziehen des Kraftfahrzeugs festgestellt wird.

Die Erfindung betrifft des Weiteren ein zweites Verfahren zum Erkennen einer Asymmetrie einer Fahrwerksgeometrie eines Kraftfahrzeugs. Bei diesem zweiten Verfahren ist es vorgesehen, dass für mittels eines Fahrerassistenzsystems assistierte Spurwechsel ein erster Abbruchanteil von Spurwechseln in einer ersten Richtung mit einem zweiten Abbruchanteil von Spurwechseln in einer zweiten Richtung verglichen wird. Das bedeutet, dass beispielsweise der erste Abbruchanteil von Spurwechseln auf eine linke Spur mit dem zweiten Abbruchanteil von Spurwechseln auf eine rechte Fahrspur verglichen wird. Hierbei wird untersucht, bei welchem Anteil an gestarteten Spurwechseln in die jeweilige Richtung der jeweilige Spurwechsel abgebrochen wird, beispielsweise aufgrund einer zu schnellen Durchführung des assistierten Spurwechsels. Bei dem zweiten Verfahren ist es vorgesehen, dass in Abhängigkeit von einem im Rahmen des Vergleichs ermittelten Unterschied zwischen den ermittelten Abbruchanteilen die Asymmetrie der Fahrwerksgeometrie festgestellt wird. Beim Feststellen der Asymmetrie der Fahrwerksgeometrie wird eine Aktion des Kraftfahrzeugs ausgelöst. Hierbei kann die jeweilige Aktion einer im Zusammenhang mit dem ersten Verfahren beschriebenen Aktion entsprechen. Die jeweilige Aktion kann insbesondere von der ermittelten Stärke der festgestellten Asymmetrie der Fahrwerksgeometrie abhängen. Bei dem zweiten Verfahren ist vorgesehen, dass die Asymmetrie der Fahrwerksgeometrie festgestellt wird, wenn die ermittelten Abbruchanteile mehr als eine vorgegebene Toleranz voneinander abweichen. Weisen beispielsweise assistierte Spurwechsel nach links einen deutlich höheren Abbruchanteil auf als assistierte Spurwechsel nach rechts, und liegt somit der Unterschied zwischen den Abbruchanteilen zwischen den Spurwechseln nach links und den Spurwechseln nach rechts außerhalb der vorgegebenen Toleranz, dann wird festgestellt, dass das Kraftfahrzeug mit einer besonders hohen Wahrscheinlichkeit nach links verzieht. Insbesondere wird der jeweilige assistierte Spurwechsel abgebrochen, wenn der Spurwechsel zu schnell durchgeführt worden ist. Das zweite Verfahren ermöglicht, dass besonders einfach anhand der jeweiligen Abbruchanteile von assistierten Spurwechseln die Asymmetrie der Fahrwerksgeometrie festgestellt werden kann.

Es kann ein Verfahren zum Betreiben eines Kraftfahrzeugs vorgesehen sein, bei welchem anhand von in einem Fahrwerk des Kraftfahrzeugs auftretenden Vibrationen eine Unwucht von Rädern des Kraftfahrzeugs und/oder ein Vorhandensein von Schneeketten an den Rädern des Kraftfahrzeugs erkannt wird. Diese Vibrationen können beispielsweise über eine schnelle Fourier-Transformation ausgewertet werden. Im Rahmen der Auswertung kann festgestellt werden, ob die ermittelten Vibrationen durch die Unwucht der Räder des Kraftfahrzeugs und/oder durch das Vorhandensein von Schneeketten an den Rädern des Kraftfahrzeugs verursacht ist. Wird festgestellt, dass die gemessenen Vibrationen einen vorgegebenen Schwellenwert überschreiten, dann wird eine Lenkmomentgrenze einer Handerkennung heraufgesetzt. Die Handerkennung ist dazu eingerichtet, festzustellen, ob der Fahrer seine Hände am Lenkrad hat. Mittels der Handerkennung wird festgestellt, dass der Fahrer seine Hände nicht am Lenkrad hat, wenn ermittelt wird, dass alle in einem vorgegebenen Zeitintervall auf eine Lenkung des Kraftfahrzeugs aufgebrachten Lenkmomente unterhalb der vorgegebenen Lenkmomentgrenze liegen. Mit anderen Worten muss der Fahrer ein größeres Lenkmoment auf die Lenkung des Kraftfahrzeugs aufbringen, wenn die gemessenen Vibrationen den vorgegebenen Schwellenwert überschreiten, um sicherzustellen, dass die Handerkennung nicht feststellt, dass der Fahrer keine Hand am Lenkrad hat. Das Heraufsetzen der Lenkmomentgrenze der Handerkennung stellt sicher, dass eine Wahrscheinlichkeit dafür, dass die Handerkennung feststellt, dass der Fahrer seine Hände am Lenkrad hat, obwohl der Fahrer seine Hände nicht am Lenkrad hat und die jeweiligen Lenkmomente auf die Lenkung des Kraftfahrzeugs lediglich durch die Vibrationen des Kraftfahrzeugs verursacht sind, besonders gering gehalten werden kann. Ein fehlerhaftes Feststellen, dass der Fahrer seine Hände am Lenkrad hat, aufgrund von durch die Vibrationen auf die Lenkung aufgebrachten Lenkmomenten kann somit besonders gut vermieden werden.

Bei diesem Verfahren kann es weiterhin vorgesehen sein, dass, wenn die gemessenen Vibrationen einen weiteren, höheren Schwellenwert überschreiten, eine maximale Fahrzeuggeschwindigkeit begrenzt wird und/oder eine Warnung ausgegeben wird und/oder ein Fahrerassistenzsystem passiviert wird. Dies bedeutet, dass, wenn die gemessenen Vibrationen besonders hoch sind und somit den weiteren, höheren Schwellenwert überschreiten, als Aktion der Fahrer des Kraftfahrzeugs hinsichtlich der Vibration des Kraftfahrzeugs gewarnt wird bzw. das Fahrerassistenzsystem deaktiviert wird, sodass beispielsweise kein assistierter Spurwechsel mehr möglich ist, bzw. eine maximal mögliche Höchstgeschwindigkeit des Kraftfahrzeugs herabgesetzt wird. Hierdurch kann trotz der festgestellten starken Vibrationen ein weiteres sicheres Steuern des Kraftfahrzeugs ermöglicht werden, damit das Kraftfahrzeug beispielsweise in eine Werkstatt gebracht werden kann. Beispielsweise kann die maximale Fahrzeuggeschwindigkeit auf 50 km/h limitiert werden, um jeweilige geschwindigkeitsabhängige Vibrationen des Kraftfahrzeugs besonders gering zu halten. Hierdurch kann eine Beschädigung von Kraftfahrzeugkomponenten aufgrund der Vibrationen besonders gering gehalten werden. Durch das Passivieren des Fahrerassistenzsystems kann ein aufgrund der Vibrationen fehlerhaftes Steuern des Kraftfahrzeugs mittels des Fahrerassistenzsystems vermieden werden.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ein Verfahrensschema für ein erstes Verfahren zum Erkennen einer Asymmetrie einer Fahrwerksgeometrie eines Kraftfahrzeugs,
- Fig. 2: ein Verfahrensschema für ein zweites Verfahren zum Erkennen einer Asymmetrie einer Fahrwerksgeometrie eines Kraftfahrzeugs, und
- Fig. 3: ein Verfahrensschema für ein Verfahren zum Betreiben eines Kraftfahrzeugs.

Fehlgewuchtete Räder und auch Schneeketten können charakteristische, gewichtsabhängige Schwingungen in einem Kraftfahrzeug verursachen, die über eine Fourier-Transformation oder mittels einer künstlichen Intelligenz kategorisiert werden können. Diese Schwingungen können von einem Lenkmomentsensor erfasst werden und anschließend ausgewertet werden.

Eine verzogene Spur führt zu einem dauerhaften Offset und somit Versatz im Lenkmoment, welches aufzubringen ist, um geradeaus zu fahren. Dies kann sich insbesondere bei der Nutzung von Fahrerassistenzsystemen in einem asymmetrischen Fahrverhalten äußern. Charakteristika im Lenkmoment für unterschiedliche Fehlerfälle können ausgewertet werden, um daraufhin ein Fahrerassistenzsystem, wie das elektronische Stabilitätsprogramm, anzupassen. Zusätzlich können spezifische Warninformationen an den Fahrer ausgegeben werden, damit dieser das Problem beheben kann und keine eingeschränkte Performance von assistierten Systemen bzw. erhöhten Verschleiß in Kauf zu nehmen hat.

Weiterhin kann ein Problem von systematischen Fahrspurwechselabbrüchen angegangen werden, indem bei Erkennung eines leichten Fehlers in der Fahrwerksgeometrie eine Spurwechselapplikation angepasst wird. Die Spurwechselapplikation kann von maximaler Performance in Richtung Sicherheit der Durchführung verstellt werden, sodass der Fahrer auch bei leicht verstellter Spur einen automatisierten Fahrspurwechsel ohne Abbrüche erleben kann. Der Spurwechsel kann hierdurch langsamer als unter Idealbedingungen durchgeführt werden, wird dafür aber seltener abgebrochen.

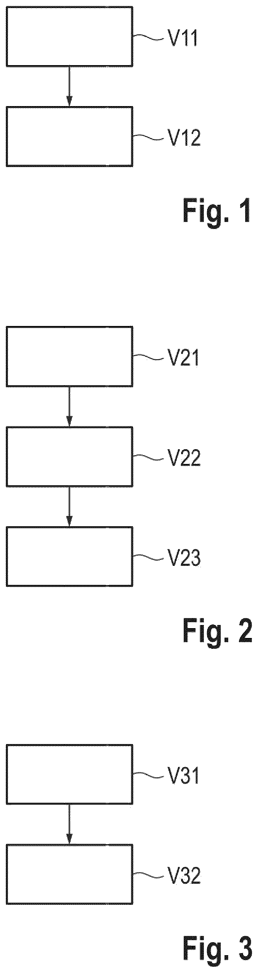

In Fig. 1 ist ein Verfahrensschema für ein erstes Verfahren zum Erkennen einer Asymmetrie eine Fahrwerksgeometrie eines Kraftfahrzeugs dargestellt. Das erste Verfahren umfasst einen ersten Verfahrensschritt V11 und einen zweiten Verfahrensschritt V12. Bei dem ersten Verfahrensschritt V11 ist es vorgesehen, dass eine Lenkinformation, welche eine Lenkung des Kraftfahrzeugs charakterisiert, zusammen mit einer ermittelten Bewegungskurve des Kraftfahrzeugs hinsichtlich eines Verziehens des Kraftfahrzeugs analysiert wird. Hierbei kann die Lenkinformation ein auf die Lenkung des Kraftfahrzeugs aufgebrachtes Lenkmoment und/oder einen auf die Lenkung des Kraftfahrzeugs aufgebrachten Lenkwinkel charakterisieren. Bei Ermitteln des Verziehens wird im Rahmen des zweiten Verfahrensschritts V12 die Asymmetrie der Fahrwerksgeometrie festgestellt und eine Aktion des Kraftfahrzeugs ausgelöst, wobei die Aktion in Abhängigkeit von einer ermittelten Stärke des Verziehens ausgewählt wird.

Das Verziehen kann in einem geraden Streckenabschnitt oder in einer Kurve ermittelt werden. Es wird festgestellt, dass sich das Kraftfahrzeug auf einem geraden Streckenabschnitt befindet, wenn ein Radius einer Fahrbahn, auf welcher sich das Kraftfahrzeug befindet, größer als ein Grenzradius ist und eine Neigung der Fahrbahn kleiner als eine Grenzneigung ist. Hierbei wird das Verziehen des Kraftfahrzeugs auf dem geraden Streckenabschnitt festgestellt, wenn die Lenkinformation charakterisiert, dass für ein fahrbahnmittiges Halten des Kraftfahrzeugs ein aufgebrachtes Lenkmoment größer als ein Grenzmoment ist und/oder ein aufgebrachter Lenkwinkel größer als ein Grenzwinkel ist. Mit anderen Worten wird das Verziehen des Kraftfahrzeugs festgestellt, wenn Spuren der Egofahrbahn des Kraftfahrzeugs einen Radius aufweisen, welcher größer als der Grenzradius, wie beispielsweise 4000 Meter, ist, und die Neigung der Fahrbahn kleiner als die Grenzneigung ist und zusätzlich ein Lenkmoment auf die Lenkung aufgebracht werden muss, welches größer ist als ein Grenzmoment, um das Kraftfahrzeug fahrspurmittig zu führen. Dieses Lenkmoment kann insbesondere von einem Fahrerassistenzsystem auf die Lenkung aufgebracht werden. Insbesondere kann das Verziehen des Kraftfahrzeugs festgestellt werden, wenn ein Integral des Lenkmoments während des Zurücklegens einer Mindeststrecke und/oder zumindest während eines vorgegebenen Zeitintervalls größer als ein Grenzwert für das Integral ist. Diese Untersuchung kann durch eine Analyse eines I-Anteils eines Reglers, insbesondere eines PID-Reglers, umgesetzt werden. Der PID-Regler ist dazu eingerichtet, das Kraftfahrzeug fahrspurmittig zu halten. Es handelt sich bei dem I-Anteil um integrierende Eigenschaften des Verhaltens des Reglers.

Beispielsweise wird das Verziehen des Kraftfahrzeugs festgestellt, wenn das Lenkrad leicht verdreht ist, beispielsweise um 1 Grad, um das Geradeausfahren des Kraftfahrzeugs zu halten. Das Verziehen wird in dem geraden Streckenabschnitt überprüft, indem kontrolliert wird, ob das Kraftfahrzeug mittig zwischen jeweiligen Fahrspurbegrenzungen fährt und ob ein von einem Fahrerassistenzsystem oder von dem Fahrer aufgeprägtes Lenkmoment in der Lenkung vorliegt.

Alternativ kann das Verziehen des Kraftfahrzeugs festgestellt werden, wenn die Spuren der Egofahrbahn einen Radius aufweisen, welcher größer ist als der Grenzradius, und die Neigung der Fahrbahn kleiner ist als die Grenzneigung und die Lenkung des Kraftfahrzeugs die Information sendet, welche charakterisiert, dass eine vorgezogene Spur des Kraftfahrzeugs anhand eines Lenkwinkel-Offsets erkannt worden ist. Wird ermittelt, dass die ermittelte Stärke des Verziehens des Kraftfahrzeugs einen ersten, niedrigeren Grenzwert überschreitet, dann wird festgestellt, dass ein Unsymmetriewert (Unsymmetrie_Value) der Fahrwerksgeometrie niedrig ist und damit Unsymmetrie_Value = low gilt. Wird festgestellt, dass die ermittelte Stärke des Verziehens einen zweiten, höheren Grenzwert überschreitet, dann wird festgestellt, dass der Unsymmetriewert hoch ist und damit Unsymmetrie_Value = high gilt.

In einem kurvigen Streckenabschnitt kann das Verziehen in Abhängigkeit von einem Unterschied zwischen ermittelten Lenkmomenten für Rechtskurven und ermittelten Lenkmomenten für Linkskurven festgestellt werden. Hierbei können mehrere erste Lenkmomente für Rechtskurven und mehrere zweite Lenkmomente für Linkskurven ermittelt werden, jeweilige ermittelte Lenkmomente in Rechtskurven und in Linkskurven hinsichtlich Kurvenradius und Geschwindigkeit kategorisiert werden, jeweilige Lenkmomente von Rechtskurven mit jeweiligen Lenkmomenten von Linkskurven in einer gleichen Kategorie verglichen werden und das Verziehen in Abhängigkeit von einem Unterschied zwischen den ermittelten Lenkmomenten festgestellt werden. Hierfür kann für sämtliche Rechtskurven und für sämtliche Linkskurven einer Kategorie jeweils der Mittelwert der Lenkmomente gebildet werden und der Mittelwert der Lenkmomente einer Kategorie für Linkskurven mit dem Mittelwert der Lenkmomente der gleichen Kategorie für Rechtskurven verglichen werden.

Für das Analysieren der Kurven dahingehend, ob es sich um Linkskurven oder um Rechtskurven handelt, sowie wie groß der Radius der jeweiligen Kurve ist, können mittels einer Kameraeinrichtung aufgezeichnete, die Fahrbahn darstellende Bilddaten analysiert werden. Alternativ können jeweilige Daten der Kurven mittels eines Navigationssystems ermittelt werden. Hierbei beschreiben die Daten der Kurven, ob es sich bei den Kurven um Linkskurven bzw. um Rechtskurven handelt, sowie welchen Radius die jeweilige Kurve aufweist.

Das Verziehen des Kraftfahrzeugs in dem kurvigen Streckenabschnitt kann besonders gut bei einem aktivierten Fahrerassistenzsystem ermittelt werden, welches dazu eingerichtet ist, das Kraftfahrzeug querzuführen bzw. eine Querführung des Kraftfahrzeugs zu assistieren. Mit anderen Worten werden die Kurven in Kategorien hinsichtlich ihres Radius und ihrer Durchfahrungsgeschwindigkeit unterteilt. Beispielsweise kann eine erste Kategorie Kurven mit einem Radius von 50 Metern bis einschließlich 100 Metern umfassen, eine zweite Kategorie Kurven von 100 Metern bis einschließlich 150 Metern umfassen, wobei die 100 Meter nicht Teil des Intervalls sind, und eine dritte Kategorie Kurven mit einem Radius von 150 Metern bis einschließlich 200 Metern umfassen, wobei Kurven mit einem Radius von 150 Metern nicht Teil des Intervalls sind. Analog können weitere Kategorien gebildet werden. Weiterhin ist jeder Kategorie ein Geschwindigkeitsbereich einer Durchfahrungsgeschwindigkeit zugeordnet. Jede Kategorie definiert einen Radienbereich sowie einen Geschwindigkeitsbereich eindeutig. Das bedeutet, dass bei einem vorgegebenen Radienbereich für zwei unterschiedliche Geschwindigkeitsbereiche für jeden der Geschwindigkeitsbereiche eine eigene Kategorie vorgegeben ist. So kann eine Kategorie Kurven mit einem Radius von 50 bis 100 Metern für den Geschwindigkeitsbereich von 70 bis 80 km/h umfassen und eine weitere Kategorie Kurven mit einem Radius von 50 bis 100 Metern für den Geschwindigkeiten von 80 bis 90 km/h umfassen. Anschließend können die Kurven in Linkskurven und Rechtskurven unterteilt werden. Die Lenkmomente jeder Kategorie können somit als Funktion der Geschwindigkeit analysiert werden. Dem liegt der Gedanke zugrunde, dass, je schneller eine jeweilige Kurve durchfahren wird, desto mehr Lenkmoment ist für das Durchfahren dieser Kurve notwendig. Weiterhin kann eine Mindestanzahl an Werten pro Kategorie vorgegeben sein, welche vorzuliegen hat, damit der Vergleich durchgeführt wird.

Die Lenkmomente pro Kategorie zwischen Linkskurven und Rechtskurven werden miteinander verglichen, um die Asymmetrie der Fahrwerksgeometrie feststellen zu können. Hat die Lenkung bereits eine Asymmetrie erkannt, beispielsweise anhand eines Lenkwinkel-Offsets, dann können Grenzwerte für den Vergleich angepasst werden, um die festgestellte Asymmetrie zu überprüfen oder um eine von der von der Lenkung festgestellten Asymmetrie abweichende Asymmetrie der Fahrwerksgeometrie feststellen zu können. Für den Vergleich der Lenkmomente wird der Mittelwert der jeweiligen Lenkmomente einer gemeinsamen Kategorie gebildet. Die gebildeten Mittelwerte der Lenkmomente von Rechtskurven und von Linkskurven einer gleichen Kategorie werden anschließend miteinander verglichen. Hierbei können für den Vergleich die angepassten Grenzwerte herangezogen werden. Im Rahmen des Vergleichs wird ein Lenkmoment einer Linkskurve mit einem Lenkmoment einer Rechtskurve für eine gleiche Kategorie verglichen.

Liegen nicht ausreichend Lenkmomente für die jeweiligen Kategorien der Linkskurven sowie der Rechtskurven vor, dann kann eine Normierung von vorhandenen Lenkmomenten jeweiliger Kategorien über ein Kennfeld erfolgen, um den Vergleich zu ermöglichen. Das bedeutet, dass über eine sich ergebende Querbeschleunigung Lenkmomente einer Kategorie in Lenkmomente einer anderen Kategorie umgerechnet werden können. Liegen somit für eine erste Kategorie, für welche der Vergleich durchgeführt werden soll, zwar für Linkskurven ausreichend Daten für den Vergleich vor, jedoch nicht für Rechtskurven, dann können die Daten für Rechtskurven einer zweiten Kategorie herangezogen und auf die erste Kategorie normiert werden. Anschließend können diese auf die erste Kategorie umgerechneten Daten für Rechtskurven mit den Daten der ersten Kategorie für Linkskurven verglichen werden, um das Verziehen des Kraftfahrzeugs zu ermitteln. Hierbei wird der Unsymmetriewert ermittelt.

Wird festgestellt, dass die ermittelte Abweichung höher als der erste, niedrigere Grenzwert, jedoch niedriger als der zweite, höhere Grenzwert ist und somit Unsymmetrie_Value = low == true und Unsymmetrie_Value = high == false vorliegt, wird zwar die Asymmetrie der Fahrwerksgeometrie festgestellt, das Kraftfahrzeug kann jedoch noch gefahren werden. Als Aktion wird in diesem Fall eine Spurwechselzeit eines mittels eines Fahrerassistenzsystemassistierten Spurwechsels angepasst. Hierfür kann eine Bahnplanung für den Spurwechsel adaptiert werden, damit Wechselzeiten von 3 bis 5 Sekunden eingehalten werden können. Zieht das Kraftfahrzeug nach links und soll der Spurwechsel nach links durchgeführt werden, würde das Kraftfahrzeug ohne Adaption schneller als 3 Sekunden nach dem Start des Spurwechsels mit seinem linken Vorderrad auf einer Fahrbahnmarkierung sein, was zu einem Abbruch des Spurwechsels führt. Dieser Spurwechselabbruch kann über ein Popup im Kraftfahrzeug mitgeteilt werden. Dieses Verhalten kann durch das beschriebene erste Verfahren deutlich verbessert werden, indem auf die robustere Applikation umgeschaltet wird, die eine langsamere Spurwechseldurchführung auslöst.

Wird im Rahmen des Vergleichs festgestellt, dass die Abweichung größer ist als der zweite, höhere Grenzwert und somit Unsymmetrie_Value = high == true gilt, dann kann als Aktion eine Warnung im Kraftfahrzeug ausgegeben werden, beispielsweise in Form eines Popups, welches lauten kann: "Bitte Werkstatt aufsuchen". Alternativ oder zusätzlich kann ein querführendes Fahrerassistenzsystem deaktiviert werden.

In Fig. 2 ist ein Verfahrensschema für ein zweites Verfahren zum Erkennen einer Asymmetrie der Fahrwerksgeometrie des Kraftfahrzeugs gezeigt. Bei dem zweiten Verfahren ist es vorgesehen, dass in einem ersten Verfahrensschritt V21 für mittels eines Fahrerassistenzsystems assistierte Spurwechsel ein erster Abbruchanteil von Spurwechseln in einer ersten Richtung mit einem zweiten Abbruchanteil von Spurwechseln in einer zweiten Richtung verglichen wird. Weiterhin ist es bei dem zweiten Verfahren vorgesehen, dass in einem zweiten Verfahrensschritt V22 in Abhängigkeit von einem Unterschied zwischen den ermittelten Abbruchanteilen die Asymmetrie der Fahrwerksgeometrie festgestellt wird. In einem dritten Verfahrensschritt V23 des zweiten Verfahrens ist vorgesehen, dass bei Feststellen der Asymmetrie der Fahrwerksgeometrie eine Aktion des Kraftfahrzeugs ausgelöst wird. Als diese Aktion kann die Spurwechselzeit des mittels des Fahrerassistenzsystems assistierten Spurwechsels angepasst werden und/oder eine Warnung im Kraftfahrzeug ausgegeben werden und/oder das querführende Fahrerassistenzsystem deaktiviert werden. Mit anderen Worten können beim zweiten Verfahren Durchführungszeiten eines assistierten Spurwechsels spezifisch für beide Wechselrichtungen abgelegt und statistisch bewertet werden. Für diese Bewertung kann eine Schwelle definiert werden. Überschreitet eine Häufigkeit von Spurwechselabbrüchen in eine bestimmte Richtung aufgrund einer zu schnellen Durchführung die definierte Schwelle, dann wird für diese Richtung auf eine robustere Applikation gewechselt, bei welcher die Spurwechselzeit angepasst ist, während bei Spurwechseln in die andere Richtung die Spurwechselzeit unverändert bleibt, wodurch in dieser anderen Richtung der Spurwechsel besonders schnell durchgeführt werden kann. Bei dem zweiten Verfahren kann anhand von Bewertungen von Wechselzeiten über eine statistisch relevante Zahl von Spurwechseln die Asymmetrie der Fahrwerksgeometrie erkannt und darauf reagiert werden. Als Reaktion kann vom Kraftfahrzeug die Information ausgegeben werden, dass festgestellt worden ist, dass die Spur verstellt ist. Die Bewertung kann bei einer hohen Anzahl von abgelegten Spurwechseln durchgeführt werden, um Neigungseinflüsse statistisch zu eliminieren. Alternativ kann ein Neigungsschätzer berücksichtigt werden, um auch bei einer geringeren Anzahl an Spurwechseln eine Bewertung durchzuführen, wobei die Bewertung lediglich bei einer geringen Neigung und somit bei einer Neigung unterhalb eines vorgegebenen Grenzwerts erfolgt.

In Fig. 3 ist ein Verfahrensschema für ein Verfahren zum Betreiben eines Kraftfahrzeugs gezeigt. Bei dem Verfahren ist es vorgesehen, dass in einem ersten Verfahrensschritt V31 anhand von in einem Fahrwerk des Kraftfahrzeugs auftretenden Vibrationen eine Unwucht von Rädern des Kraftfahrzeugs und/oder ein Vorhandensein von Schneeketten an den Rädern des Kraftfahrzeugs erkannt wird. Die Auswertung der Unwucht kann über eine schnelle Fourier-Transformation und somit über eine schnelle Frequenzanalyse erfolgen. In einem zweiten Verfahrensschritt V32 des Verfahrens ist vorgesehen, dass, wenn die gemessenen Vibrationen einen vorgegebenen ersten Schwellenwert überschreiten, eine Lenkmomentgrenze einer Handerkennung heraufgesetzt wird. Die Handerkennung ist dazu eingerichtet, festzustellen, dass der Fahrer seine Hände nicht am Lenkrad hat, wenn ermittelt wird, dass alle in einem vorgegebenen Zeitintervall auf eine Lenkung des Kraftfahrzeugs aufgebrachten Lenkmomente unterhalb der Lenkmomentgrenze liegen. Das bedeutet, dass die Lenkmomentgrenze für eine ermittelte Fahreraktivität heraufgesetzt wird, wenn festgestellt wird, dass die ermittelten Vibrationen den ersten Schwellenwert überschreiten. Bei dem Anpassen der Lenkmomentgrenze kann diese beispielsweise von 0,5 Nm auf 0,8 Nm hochgesetzt werden. Hierdurch wird bewirkt, dass Hands-off-Warnungen vom Kraftfahrzeug ausgegeben werden, wenn der Fahrer keine Hand am Lenkrad hat, aber ein Lenkmoment erkannt worden ist, welches durch das Kraftfahrzeug, insbesondere Vibrationen, entsteht.

Wird festgestellt, dass die gemessenen Vibrationen einen im Vergleich zum ersten Schwellenwert höheren, zweiten Schwellenwert überschreiten, dann werden eine maximale Fahrzeuggeschwindigkeit begrenzt und/oder eine Warnung im Kraftfahrzeug ausgegeben und/oder ein Fahrerassistenzsystem passiviert. Als Warnung kann ein Popup im Kraftfahrzeug ausgegeben werden mit den Worten "Unwucht erkannt". Alternativ oder zusätzlich kann die Fahrzeuggeschwindigkeit für eine automatische Distanzregelung begrenzt, beispielsweise auf 50 km/h limitiert werden. Hierbei kann als Sicherheitsfunktion vorgesehen sein, dass der Fahrer durch einen Kick-down das Kraftfahrzeug auf eine Geschwindigkeit von mehr als 50 km/h beschleunigen kann.

Bei dem Verfahren kann somit zwischen zwei Stufen der Ausprägung des Problems und somit zwischen hohen Vibrationen und niedrigen Vibrationen unterschieden werden. Bei ermittelten niedrigen Vibrationen, welche höher sind als der erste Schwellenwert, aber niedriger sind als der zweite Schwellenwert, erfolgt die Anpassung der Lenkmomentgrenze, wohingegen beim Feststellen von Vibrationen, welche größer sind als der zweite Schwellenwert, der Fahrer über ein Popup dazu angewiesen wird, eine Werkstatt aufzusuchen, und/oder von der Vibration betroffene Fahrerassistenzsysteme gesperrt und somit deaktiviert werden.

Wird eine dieser beiden Flags gesetzt, von welchen eine erste "hohe Vibration oberhalb des zweiten Schwellenwerts" charakterisiert und die zweite "niedrige Vibration oberhalb des ersten Schwellenwerts und unterhalb des zweiten Schwellenwerts" charakterisiert, dann kann es vorgesehen sein, dass der Fahrer zu Beginn der nächsten Fahrt und somit nach einem Klemme-15-Wechsel über ein Popup im Human-Machine-Interface zu bestätigen hat, dass das Kraftfahrzeug kontrolliert worden ist. Anschließend kann das Verfahren neu mit der Überprüfung von Vibrationen starten. Erfolgt die Bestätigung nicht, dann werden für ein weiteres Verfahren die Flags beibehalten. Das bedeutet, dass für das weitere Verfahren durch die ausgelöste Aktion vorgenommene Fahrzeugeinstellungen des Kraftfahrzeugs beibehalten werden. Insbesondere werden diese Fahrzeugeinstellungen für weitere Fahrten des Kraftfahrzeugs beibehalten, bis bestätigt worden ist, dass das Kraftfahrzeug kontrolliert und ggf. repariert worden ist.

Ist die Vibration des Kraftfahrzeugs bekannt, dann kann eine Auslöseschwelle des elektronischen Stabilitätsprogramms angehoben werden. Alternativ oder zusätzlich kann einer Verteilung der Bremskraft angepasst werden, wenn erkannt wird, welches Rad die Unwucht aufweist.

Insgesamt zeigt die Erfindung wie ein Verfahren zur Erkennung charakteristischer Störungen im Lenkmomentverlauf und Adaption einer Fahrerassistenzfunktion erfolgen kann.

### Bezugszeichenliste

- V11 bis V33: jeweilige Verfahrensschritte

## Patentansprüche

1. Verfahren zum Erkennen einer Asymmetrie einer Fahrwerksgeometrie eines Kraftfahrzeugs, bei welchem
- eine Lenkinformation, welche eine Lenkung des Kraftfahrzeugs charakterisiert, zusammen mit einer ermittelten Bewegungskurve des Kraftfahrzeugs hinsichtlich eines Verziehens des Kraftfahrzeugs analysiert wird, und
- bei Ermitteln des Verziehens die Asymmetrie der Fahrwerksgeometrie festgestellt wird und eine Aktion des Kraftfahrzeugs ausgelöst wird, wobei die Aktion in Abhängigkeit von einer ermittelten Stärke des Verziehens ausgewählt wird, **dadurch gekennzeichnet, dass**
- ein erstes Lenkmoment für eine Rechtskurve mit einem zweiten Lenkmoment für eine Linkskurve verglichen wird und das Verziehen in Abhängigkeit von einem Unterschied zwischen den Lenkmomenten festgestellt wird, und/oder
- als Aktion eine Spurwechselzeit eines mittels eines Fahrerassistenzsystems assistierten Spurwechsels angepasst wird, wenn festgestellt wird, dass die ermittelte Stärke des Verziehens einen ersten, niedrigeren Grenzwert überschreitet, und/oder ein Fahrerassistenzsystem deaktiviert wird, wenn festgestellt wird, dass die ermittelte Stärke des Verziehens einen zweiten, höheren Grenzwert überschreitet.

2. Verfahren nach Anspruch 1, wobei die Lenkinformation ein Lenkmoment und/oder einen Lenkwinkel charakterisiert.

3. Verfahren nach Anspruch 1 oder 2, wobei festgestellt wird, dass sich das Kraftfahrzeug auf einem geraden Streckenabschnitt befindet, wenn ein Radius einer Fahrbahn, auf welcher sich das Kraftfahrzeug befindet, größer als ein Grenzradius ist und eine Neigung der Fahrbahn kleiner als eine Grenzneigung ist, wobei das Verziehen des Kraftfahrzeugs auf dem geraden Streckenabschnitt festgestellt wird, wenn ein für ein fahrbahnmittiges Halten des Kraftfahrzeugs aufgebrachtes Lenkmoment größer als ein Grenzmoment ist.

4. Verfahren nach einem der vorhergehenden Ansprüche, wobei mehrere erste Lenkmomente für Rechtskurven und mehrere zweite Lenkmomente für Linkskurven ermittelt werden, jeweilige ermittelte Lenkmomente in Rechtskurven und in Linkskurven hinsichtlich Kurvenradius und Durchfahrungsgeschwindigkeit kategorisiert werden, jeweilige Lenkmomente von Rechtskurven mit jeweiligen Lenkmomenten von Linkskurven einer gleichen Kategorie verglichen werden und das Verziehen in Abhängigkeit von einem Unterschied zwischen den ermittelten Lenkmomenten festgestellt wird.

5. Verfahren nach Anspruch 4, wobei für sämtliche Rechtskurven und für sämtliche Linkskurven einer Kategorie der Mittelwert der Lenkmomente gebildet wird und der Mittelwert der Lenkmomente einer Kategorie für Linkskurven mit dem Mittelwert der Lenkmomente der gleichen Kategorie für Rechtskurven verglichen wird.

6. Verfahren nach einem der vorhergehenden Ansprüche, wobei als Aktion eine Warnung im Kraftfahrzeug ausgegeben wird, wenn festgestellt wird, dass die ermittelte Stärke des Verziehens den zweiten, höheren Grenzwert überschreitet.

7. Verfahren zum Erkennen einer Asymmetrie einer Fahrwerksgeometrie eines
Kraftfahrzeugs, **dadurch gekennzeichnet, dass**
- für mittels eines Fahrerassistenzsystems assistierte Spurwechsel ein erster Abbruchanteil von Spurwechseln in einer ersten Richtung mit einem zweiten Abbruchanteil von Spurwechseln in einer zweiten Richtung verglichen wird,
- in Abhängigkeit von einem Unterschied zwischen den ermittelten Abbruchanteilen die Asymmetrie der Fahrwerksgeometrie festgestellt wird, und
- bei Feststellen der Asymmetrie der Fahrwerksgeometrie eine Aktion des Kraftfahrzeugs ausgelöst wird.

## Claims

1. Method for detecting an asymmetry in a chassis geometry of a motor vehicle, in which method
- steering information that describes steering of the motor vehicle is analyzed, together with a determined driving turn of the motor vehicle, with regard to a misalignment of the motor vehicle, and
- on determining the misalignment, the asymmetry of the chassis geometry is identified and an action for the motor vehicle is triggered, the action being selected on the basis of a determined extent of the misalignment,
**characterized in that**
- a first steering torque for a right turn is compared to a second steering torque for a left turn, and the misalignment is identified on the basis of a difference between the steering torques, and/or
- as the action, a lane change time for a lane change assisted by means of a driver assistance system is adjusted if it is identified that the determined extent of the misalignment exceeds a lower first limit value, and/or a driver assistance system is deactivated if it is identified that the determined extent of the misalignment exceeds a higher second limit value.

2. Method according to claim 1, wherein the steering information describes a steering torque and/or a steering angle.

3. Method according to claim 1 or 2, wherein it is identified that the motor vehicle is located on a straight road portion if a radius of a roadway on which the motor vehicle is located is greater than a limit radius and a gradient of the roadway is less than a limit gradient, wherein the misalignment of the motor vehicle is identified on the straight road portion if a steering torque applied to keep the motor vehicle centered on the roadway is greater than a limit torque.

4. Method according to any of the preceding claims, wherein a plurality of first steering torques are determined for right turns and a plurality of second steering torques are determined for left turns, respective determined steering torques are categorized into right turns and left turns with regard to turn radius and travel speed, respective steering torques of right turns are compared to respective steering torques of left turns of the same category, and the misalignment is identified on the basis of a difference between the determined steering torques.

5. Method according to claim 4, wherein the mean value of the steering torques is calculated for all right turns and for all left turns of a category, and the mean value of the steering torques for left turns of a category is compared to the mean value of the steering torques for right turns of the same category.

6. Method according to any of the preceding claims, wherein as the action, a warning is output in the motor vehicle if it is identified that the determined extent of the misalignment exceeds the higher second limit value.

7. Method for detecting an asymmetry in a chassis geometry of a motor vehicle, **characterized in that**
- for lane changes assisted by means of a driver assistance system, a first aborted proportion of lane changes in a first direction is compared to a second aborted proportion of lane changes in a second direction,
- the asymmetry of the chassis geometry is identified on the basis of a difference between the determined aborted proportions, and
- on identifying the asymmetry of the chassis geometry, an action for the motor vehicle is triggered.

## Revendications

1. Procédé de détection d'une asymétrie d'une géométrie de châssis d'un véhicule automobile, dans lequel
- une information de direction, qui caractérise une direction du véhicule automobile, est analysée conjointement avec une courbe de mouvement déterminée du véhicule automobile en ce qui concerne un gauchissement du véhicule automobile, et
- lors de la détermination du gauchissement, l'asymétrie de la géométrie de châssis est constatée et une action du véhicule automobile est déclenchée, dans lequel l'action est sélectionnée en fonction d'une intensité déterminée du gauchissement,
**caractérisé en ce que**
- un premier couple de direction pour un virage à droite est comparé à un second couple de direction pour un virage à gauche et le gauchissement est constaté en fonction d'une différence entre les couples de direction, et/ou
- en guise d'action, un temps de changement de voie d'un changement de voie assisté au moyen d'un système d'assistance au conducteur est adapté lorsqu'il est constaté que l'intensité déterminée du gauchissement dépasse une première valeur limite inférieure, et/ou un système d'assistance au conducteur est désactivé lorsqu'il est constaté que l'intensité déterminée du gauchissement dépasse une seconde valeur limite supérieure.

2. Procédé selon la revendication 1, dans lequel l'information de direction caractérise un couple de direction et/ou un angle de direction.

3. Procédé selon la revendication 1 ou 2, dans lequel il est constaté que le véhicule automobile se trouve sur une section de route rectiligne lorsqu'un rayon d'une voie de circulation, sur laquelle se trouve le véhicule automobile, est supérieur à un rayon limite et qu'une inclinaison de la voie de circulation est inférieure à une inclinaison limite, dans lequel le gauchissement du véhicule automobile sur la section de route rectiligne est constaté lorsqu'un couple de direction appliqué pour un arrêt du véhicule automobile au milieu de la voie est supérieur à un couple limite.

4. Procédé selon l'une des revendications précédentes, dans lequel plusieurs premiers couples de direction pour des virages à droite et plusieurs seconds couples de direction pour des virages à gauche sont déterminés, des couples de direction déterminés respectifs dans des virages à droite et dans des virages à gauche sont catégorisés en termes de rayon de virage et de vitesse de passage, des couples de direction respectifs de virages à droite sont comparés à des couples de direction respectifs de virages à gauche d'une même catégorie, et le gauchissement est constaté en fonction d'une différence entre les couples de direction déterminés.

5. Procédé selon la revendication 4, dans lequel la valeur moyenne des couples de direction est formée pour tous les virages à droite et pour tous les virages à gauche d'une catégorie et la valeur moyenne des couples de direction d'une catégorie pour les virages à gauche est comparée à la valeur moyenne des couples de direction de la même catégorie pour les virages à droite.

6. Procédé selon l'une des revendications précédentes, dans lequel, en guise d'action, un avertissement est émis dans le véhicule automobile lorsqu'il est constaté que l'intensité déterminée du gauchissement dépasse la seconde valeur limite supérieure.

7. Procédé de détection d'une asymétrie d'une géométrie de châssis d'un véhicule automobile, **caractérisé en ce que**
- pour des changements de voie assistés par un système d'assistance au conducteur, un premier pourcentage d'interruption de changements de voie dans une première direction est comparé à un second pourcentage d'interruption de changements de voie dans une seconde direction,
- en fonction d'une différence entre les pourcentages d'interruption déterminés, l'asymétrie de la géométrie de châssis est constatée, et
- lorsque l'asymétrie de la géométrie de châssis est constatée, une action du véhicule automobile est déclenchée.
